# EUROPÄISCHE PATENTSCHRIFT

(11) **EP 3 311 943 B1**
(45) Veröffentlichungstag und Bekanntmachung des Hinweises auf die Patenterteilung: **22.12.2021**
(21) Anmeldenummer: 17206252.3
(22) Anmeldetag: 31.08.2016
(51) Int. Cl.: B23B 51/00, B23B 31/00

(54) **ROHLING FÜR EINEN FORMBOHRER, SOWIE FORMBOHRER**
BLANK FOR PRODUCING A FORM DRILL BIT, AND FORM DRILL BIT
ÉBAUCHE DESTINÉE À FABRIQUER UN FORET DE FORME, ET FORET DE FORME

(30) Priorität: 20.11.2015 DE 202015106359 U
(43) Veröffentlichungstag der Anmeldung: 25.04.2018
(62) Teilanmeldung aus: 16186540.7
(73) Patentinhaber: Simtek AG, 72116 Mössingen (DE)
(72) Erfinder: Seifermann, Norbert, 72411 Bodelshausen (DE)
(74) Vertreter: Jakelski & Althoff Patentanwälte PartG mbB

(56) Entgegenhaltungen:
- EP-A1- 2 826 580
- DE-U1- 20 214 442
- DE-U1-202014 009 819
- FR-A- 656 484
- US-A- 5 466 100

## Beschreibung

Die vorliegende Erfindung betrifft einen Rohling zur Herstellung eines Formbohrers und einen Formbohrer, der insbesondere aus diesem Rohling hergestellt werden kann.

### Stand der Technik

Formbohrer werden verwendet, wenn eine bestimmte Form, wie beispielsweise eine Stufenform, innerhalb eines Werkstücks gefertigt werden soll. Dementsprechend werden Formbohrer nicht nur in einem Standardsortiment vertrieben, sondern es fallen auch viele Sonderanfertigungen an. EP 2 826 580 A1 offenbart einen Formbohrer nach dem Oberbegriff des Anspruchs 3.

Formbohrer können als Schneideinsätze oder als Wendeschneidplatten ausgeführt sein, die auf einem Grundhalter montiert sind. Die lösbare formschlüssige Befestigung des Formbohrers erfolgt hierbei in der Regel mit einer Schraube. Durch die rotierende Bewegung des Werkstücks und des Werkzeugs entsteht auf die Anlagefläche des Schraubenkopfes eine Art Hebelwirkung. Dadurch kann die Schraube die Kraft nicht mehr gleichmäßig aufnehmen und wird punktuell stark belastet. Die Folge ist ein schneller Verschleiß des Verbindungselements, bei dessen Bruch sowohl der Grundhalter, der Schneideinsatz bzw. die Wendeschneidplatte als auch das Werkstück selbst in Mitleidenschaft gezogen werden können. Durch die Art der Verbindung bzw. Befestigung der Wendeschneidplatte wird immer ein Auf- oder Unterbau am Grundhalter benötigt, um Platz für das Gewinde der Schraube zu haben. Dadurch ist diese Lösung im Bereich der Kleinstbearbeitung nur eingeschränkt nutzbar oder sogar ungeeignet. Durch das Prinzip Grundhalter und wechselbarer Schneideinsatz bzw. wechselbare Wendeschneidplatte ist diese Methode materialeffizient und sofern nicht durch Materialbruch entstandene unwiderrufliche Schäden dies verhindern, auch sehr langlebig. Hierbei ist in der Regel nur der Schneideinsatz bzw. die Wendeschneidplatte aus Hartmetall gefertigt, während der Grundhalter aus kostengünstigem Stahl gefertigt wird. Allerdings gestaltet sich ein Werkzeugwechsel bei dieser Lösung als zeitaufwendig.

Formbohren kann auch mit aus dem Vollen ausgearbeiteten Vollhartmetallrundstab-Formbohrern erfolgen. Diese Lösung ist gegenüber dem Formbohren mit Schneideinsätzen und Wendeschneidplatten bezüglich Kleinstbearbeitung weniger eingeschränkt. Sie orientiert sich sehr stark an Standardbohrern, wie sie beispielsweise auch für Bohrmaschinen verwendet werden und übernimmt im Wesentlichen deren Vor- und Nachteile. Gegenüber der Verwendung von Schneideinsätzen und Wendeschneidplatten ist diese Lösung sehr stabil und an sich verschleißfest. Dafür ist sie jedoch weniger verdrehsicher. Außerdem ist die Herstellung derartiger Formbohrer sehr aufwendig, weil die Form ins volle Hartmetall gefertigt werden muss. Da meistens das komplette Werkzeug aus Hartmetall besteht, d. h. auch der Bereich, der in der endgültigen Werkzeugaufnahme gespannt wird, ist der Materialverbrauch hierbei sehr hoch.

Es ist eine Aufgabe der vorliegenden Erfindung einen verdrehsicheren Formbohrer bereitzustellen, der für die Kleinstbearbeitung geeignet ist. Eine weitere Aufgabe besteht darin, einen Rohling bereitzustellen, aus dem dieser Formbohrer materialeffizient hergestellt werden kann.

Offenbarung der Erfindung Diese Aufgabe wird in einem Aspekt der Erfindung durch einen Rohling für einen Formbohrer nach Anspruch 1 gelöst, der einen ersten Bereich mit im Wesentlichen viereckigem Querschnitt und einen zweiten Bereich mit im Wesentlichen viereckigem Querschnitt aufweist. Der erste Bereich ist parallel zum zweiten Bereich angeordnet. Dabei kontaktiert die längste Seite des Querschnitts des ersten Bereichs die längste Seite des Querschnitts des zweiten Bereichs. Unter "Kontaktieren" wird dabei sowohl ein unmittelbares Kontaktieren, als auch ein mittelbares Kontaktieren über einen Verbindungsbereich verstanden, wobei der maximale Abstand zwischen dem ersten Bereich und dem zweiten Bereich jedoch 1 mm nicht überschreitet. Ein unmittelbares Kontaktieren ohne Verbindungsbereich ist bevorzugt. Dieser Rohling liegt also nicht wie herkömmliche Formbohrerrohlinge als Rundstab vor, in den dann die gewünschte Form hineingearbeitet werden muss. Stattdessen weist er bereits eine eckige im Querschnitt annähernd Z-förmige Struktur auf, was das Herstellen einer spanformenden und leitenden Geometrie erleichtert. Auf all das Material, das bei der Herstellung eines Formbohrers aus einem Rundstab später weggearbeitet werden müsste oder das nicht zwingend benötigt wird, wird also von vornherein verzichtet.

Der Querschnitt des ersten Bereichs und der Querschnitt des zweiten Bereichs sind jeweils trapezförmig. Dabei verlaufen die parallelen Seiten des Trapezes des ersten Bereichs parallel zu den parallelen Seiten des Trapezes des zweiten Bereichs. Die nicht parallelen Seiten der Trapeze verleihen dem Rohling an seinen Schmalseiten eine abgeschrägte Form, was die Herstellung einer Eingreiffläche auf einem aus dem Rohling hergestellten Formbohrer für den Spanstopper vereinfacht. Bei den Trapezen handelt es sich um rechtwinklige bzw. orthogonale Trapeze, wobei die Seite des trapezförmigen Querschnitts des ersten Bereichs, welche über zwei rechte Winkel mit benachbarten Seiten verbunden ist, parallel zu jener Seite des trapezförmigen Querschnitts des zweiten Bereichs verläuft, die ihrerseits über zwei rechte Winkel mit benachbarten Seiten verbunden ist. Dies ermöglicht eine besonders belastbare Verbindung zwischen dem ersten Bereich und dem zweiten Bereich. Weiterhin ist es bevorzugt, dass der Querschnitt des ersten Bereichs im Wesentlichen dem Querschnitt des zweiten Bereichs entspricht. Dies führt dazu, dass der Rohling einen punktsymmetrischen Querschnitt aufweist, wodurch er bei der Herstellung eines Formbohrers gleichermaßen in einer ersten Position oder in einer zweiten gegenüber der ersten Position um 180° gedrehten zweiten Position verwendet werden kann. Auch können aus einem solchen Rohling Formbohrer hergestellt werden, welche ihrerseits punktsymmetrisch sind und somit wahlweise in einer ersten Orientierung oder in einer gegenüber der ersten Orientierung um 180° gedrehten zweiten Orientierung in einem Werkzeughalter angeordnet werden können.

In einem zweiten Aspekt der Erfindung wird die Aufgabe durch einen Formbohrer nach Anspruch 3 gelöst, welcher insbesondere aus einem Rohling gemäß dem ersten Aspekt der Erfindung herstellbar ist. Der Formbohrer weist einen Bohrabschnitt und einen Einspannabschnitt auf. Unter dem Bohrabschnitt wird dabei jener Abschnitt des Formbohrers verstanden, welcher das zur Bearbeitung eines Werkstücks benötigte Werkzeug aufweist. Unter dem Einspannabschnitt wird jener Abschnitt des Formbohrers verstanden, welcher dazu vorgesehen ist, in einem Werkzeugaufnahmebereich eines Werkzeughalters eingespannt zu werden. Der Einspannabschnitt weist einen ersten Einspannbereich mit im Wesentlichen rechtwinklig trapezförmigem Querschnitt und einen zweiten Einspannbereich mit im Wesentlichen rechtwinklig trapezförmigem Querschnitt auf. Der Einspannabschnitt weist eine eckige im Querschnitt annähernd Z-förmige Struktur auf. Der erste Einspannbereich ist parallel zum zweiten Einspannbereich angeordnet. Die längste Seite des Querschnitts des ersten Einspannbereichs kontaktiert die längste Seite des Querschnitts des zweiten Einspannbereichs. Die Seite des trapezförmigen Querschnitts des ersten Einspannbereichs, welche über zwei rechte Winkel mit benachbarten Seiten verbunden ist, verläuft parallel zu jener Seite des trapezförmigen Querschnitts des zweiten Einspannbereichs verläuft, die ihrerseits über zwei rechte Winkel mit benachbarten Seiten verbunden ist. Ein solcher Formbohrer kann aus dem Rohling gemäß dem ersten Aspekt der Erfindung hergestellt werden, ohne dass eine Bearbeitung sämtlicher Flächen des Formbohrers notwendig wäre. Der Einspannabschnitt kann deshalb in bevorzugten Ausführungsformen des Formbohrers insbesondere solche Geometrien aufweisen, die auch für die Form des Rohlings bevorzugt sind.

### Kurze Beschreibung der Zeichnungen

Ausführungsbeispiele der Erfindung sind in den Zeichnungen dargestellt und in der nachfolgenden Beschreibung näher erläutert.
- Fig. 1: zeigt eine isometrische Darstellung eines Rohlings gemäß einem Ausführungsbeispiel der Erfindung.
- Fig. 2a: zeigt eine isometrische Darstellung eines Formbohrers gemäß einem Ausführungsbeispiel der Erfindung.
- Fig. 2b: zeigt eine Stirnansicht auf die Spitze des Formbohrers gemäß Fig. 2a.
- Fig. 3a: zeigt eine isometrische Darstellung eines Formbohrers gemäß einem anderen Ausführungsbeispiel der Erfindung.
- Fig. 3b: zeigt eine Stirnansicht auf die Spitze des Formbohrers gemäß Fig. 3a.
- Fig. 4: zeigt eine isometrische Explosionsdarstellung eines Werkzeughalters für einen Formbohrer gemäß einem Ausführungsbeispiel der Erfindung.
- Fig. 5: zeigt eine Seitenansicht eines mit einem Spannfutter versehenen Grundkörpers des Werkzeughalters gemäß Fig. 4, ohne Überwurfmutter.
- Fig. 6: zeigt eine Schnittdarstellung einer Überwurfmutter des Werkzeughalters gemäß Fig. 4.
- Fig. 7a: zeigt eine isometrische Darstellung eines Spanstoppers des Werkzeughalters gemäß Fig. 4.
- Fig. 7b: zeigt eine Ansicht des Spanstoppers gemäß Fig. 7a von seiner Rückseite.
- Fig. 8a: zeigt eine isometrische Darstellung eines Werkzeughaltersystems für einen Formbohrer gemäß einem Ausführungsbeispiel der Erfindung.
- Fig. 8b: zeigt eine Schnittdarstellung des Werkzeughaltersystems gemäß Fig. 8a.

### Ausführungsbeispiele der Erfindung

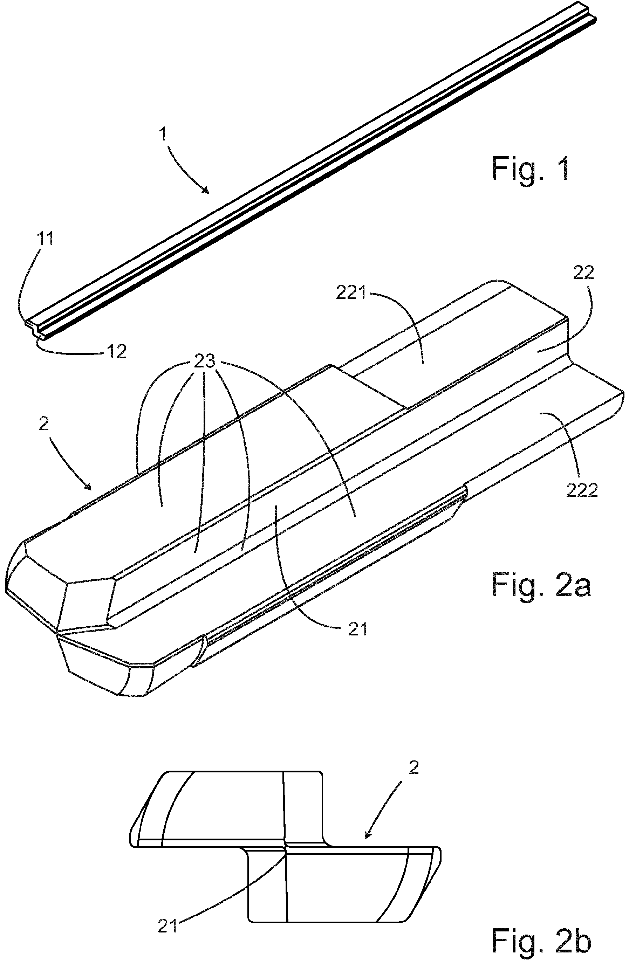

Ein Rohling 1 zur Herstellung von Formbohrern ist in Fig. 1 dargestellt. Der Rohling 1 besteht aus einem Hartmetall und weist einen ersten Bereich 11 und einen zweiten Bereich 12 auf. Die beiden Bereiche 11, 12 verfügen jeweils über denselben Querschnitt. Dieser entspricht der Form eines rechtwinkligen Trapezes. Dabei verlaufen die parallelen Seiten des Querschnitts des ersten Bereichs 11 parallel zu den parallelen Seiten des Querschnitts des zweiten Bereichs 12. Die auf den voranstehend genannten parallelen Seiten orthogonal stehenden Seiten der Trapeze sind ihrerseits parallel zueinander angeordnet. Zwischen diesen beiden parallelen Seiten kontaktiert der erste Bereich 11 unmittelbar den zweiten Bereich 12. Dabei sind die beiden Bereiche 11, 12 einstückig ausgeführt. Der Querschnitt des Rohlings 1 ist punktsymmetrisch.

Aus dem Rohling 1 können durch Materialabtrag unterschiedliche Formbohrer hergestellt werden. Ein solcher Formbohrer gemäß einem ersten Ausführungsbeispiel der Erfindung ist in den Fig. 2a, 2b dargestellt. Dieser Formbohrer 2 weist einen Bohrabschnitt 21 auf, welcher gefertigt wurde, indem ein Ende des Rohlings lediglich an seinen Kanten abgeschrägt wurde. Ein Einspannabschnitt 22 dieses Formbohrers 2 wurde erhalten, indem die Materialdicke des Rohlings 1 in diesem Abschnitt unter Beibehaltung seiner Geometrie verringert wurde. Dadurch weist der Einspannabschnitt 22 einen ersten Einspannbereich 221 und einen zweiten Einspannbereich 222 auf, deren Geometrie dem ersten Bereich 11 und dem zweiten Bereich 12 des Rohlings 1 bei lediglich verringerter Materialdicke entspricht. Einige Flächen 23 bleiben gegenüber dem Rohling 1 unbearbeitet. Im Übrigen ist der Formbohrer 2 kürzer als der Rohling 1, so dass aus dem Rohling 1 mehrerer Formbohrer 2 hergestellt werden können.

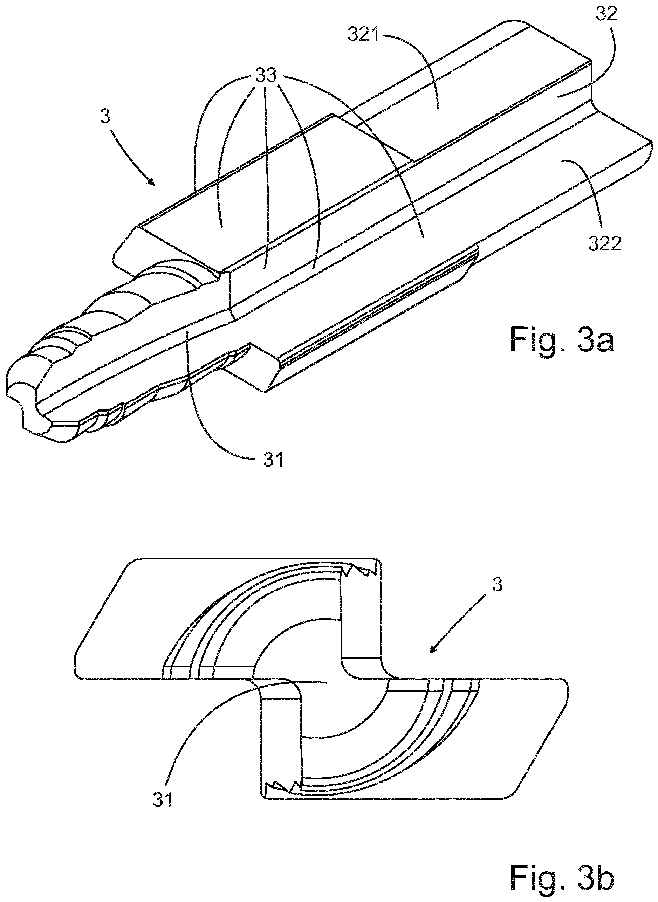

Ein Formbohrer 3 gemäß einem zweiten Ausführungsbeispiel der Erfindung ist in den Fig. 3a und 3b dargestellt. Durch umfangreichen Materialabtrag wurde ein Bohrabschnitt 31 erzeugt, der eine konische Form mit mehreren Abstufungen und zwei tiefen Einschnitten aufweist. Während sich dieser deutlich vom Bohrabschnitt 21 des voranstehend beschriebenen Formbohrers 2 unterscheidet, wurde sein Einspannabschnitt 32 in derselben Weise wie der Einspannabschnitt 22 des Formbohrers 2 gemäß dem ersten Ausführungsbeispiel hergestellt, so dass dessen erster Einspannbereich 321 und sein zweiter Einspannbereich 322 den Einspannbereichen 221, 222 jenes Formbohrers 2 entsprechen. Auch an diesem Formbohrer 3 bleiben einige Flächen 33 bleiben gegenüber dem Rohling 1 unbearbeitet.

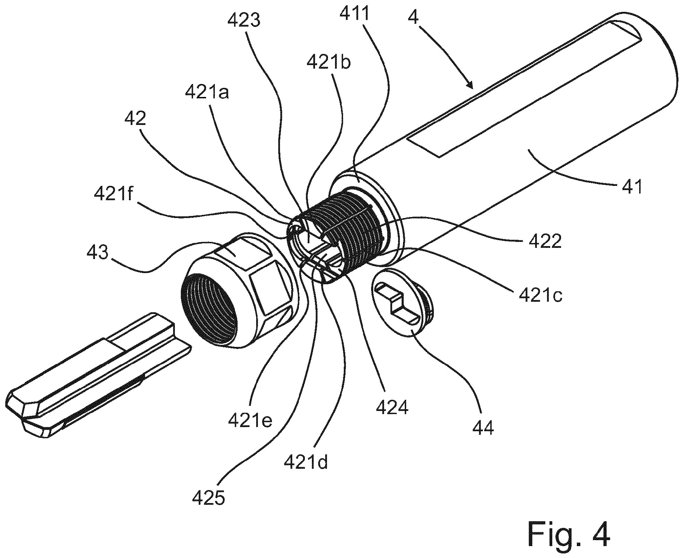

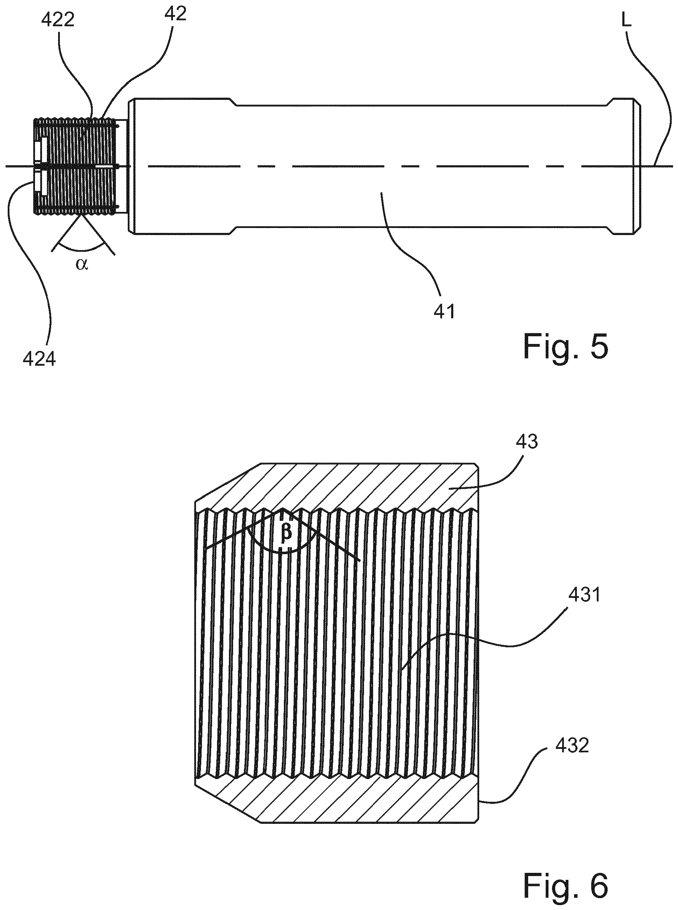

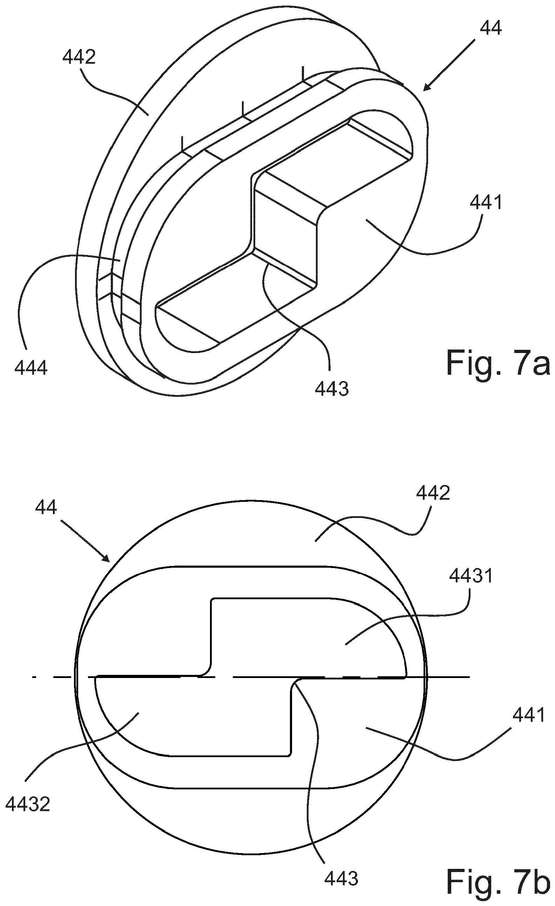

Ein Werkzeughalter 4, welcher eingerichtet ist, um die Formbohrer 2, 3 aufzunehmen, ist zusammen mit seinen Einzelteilen in den Fig. 4 bis 7b dargestellt. Er weist einen kreiszylinderförmigen Grundkörper 41 mit einer seitlichen Abflachung auf. An einem Ende des Grundkörpers 41 schließt sich ein kreiszylinderförmiges Spannfutter 42 mit sechs Trennfugen 421a-f an. Das Spannfutter 42 weist einen hohlen Innenraum auf, der sich entlang seiner Längsachse L erstreckt und an dem Grundkörper 41 endet. Dieser Innenraum fungiert als Werkzeugaufnahmebereich 425 zur Aufnahme des Einspannabschnitts 22, 32 eines Formbohrers 2, 3. Er weist einen länglichen Querschnitt auf, dessen längste Seiten parallel zueinander verlaufen und dessen Enden halbkreisförmig abgerundet sind. Zum Spannen des Spannfutters 42 ist eine Überwurfmutter 43 vorgesehen, die an ihrer Außenseite Anlageflächen aufweist, um die Überwurfmutter 43 mittels eines Schraubenschlüssels anzuziehen. Beim Anziehen der Überwurfmutter 43 schlägt diese mit ihrer Rückseite 432 zunächst an einer Anschlagfläche 411 an, welche sich an der dem Spannfutter 42 zugewandten Seite des Grundkörpers 41 befindet. Ein noch weiteres Anziehen der Überwurfmutter 43 führt zu einem Spannen des Spannfutters 42. Wie in Fig. 5 dargestellt, weist das Spannfutter 42 hierzu ein Außengewinde 422 mit einem Außenspitzenwinkel α von 120° auf. Die Überwurfmutter 43 weist wie in Fig. 6 dargestellt ist ein Innengewinde mit einem Innenspitzenwinkel β von 120° und einer Gewindesteigung von 1 mm auf. Dies ermöglicht beim Anziehen der Überwurfmutter 43 eine hohe Kraftübertragung auf das Spannfutter 42. Um hierbei ein Brechen des Werkzeughalters 4 zu verhindern, bestehen der Grundkörper 41, das Spannfutter 42 und die Überwurfmutter 43 aus Stahl mit einem E-Modul von 195 kN/mm².

An seinem dem Grundkörper 41 abgewandten Ende weist das Spannfutter 42 eine sich orthogonal zur Längsachse L des Spannfutters 42 erstreckende Öffnung 423 mit einem Hinterschnitt auf. In diese ist ein Spanstopper 44 mit einem Befestigungsabschnitt 441 eingeführt, dessen Querschnitt dem Querschnitt der Öffnung 423 im Spannfutter 42 entspricht. Ein Spanstoppabschnitt 442 mit einem kreisförmigen Querschnitt, dessen Durchmesser dem Durchmesser des Spannfutters 42 entspricht, weist eine entlang der Längsachse des Spannfutters 42 durch den gesamten Spanstopper 44 hindurchgehende Öffnung 443 auf. Der Querschnitt dieser Öffnung 443 ist so ausgebildet, dass sie die Einspannabschnitte 22, 32 der Formbohrer 2, 3 aufnehmen kann. Dazu weist sie einen ersten Öffnungsbereich 4431 und einen zweiten Öffnungsbereich 4432 auf, deren Querschnitte im Wesentlichen den Querschnitten der Einspannbereiche 221, 222 321, 322 der Formbohrer 2, 3 entsprechen, wobei die Außenkanten der rechtwinkligen Trapeze, welche im Formbohrer jeweils nur zueinander und ansonsten zu keiner anderen Seite der Einspannabschnitte 22, 32 parallel verlaufen, in der Öffnung 443 des Spanstoppers 44 abgerundet sind, so dass diese Öffnung 443 einen geringfügig größeren Querschnitt aufweist als die Einspannabschnitte 22, 32. Der Befestigungsabschnitt 441 ist über einen Verbindungsabschnitt 444 mit dem Spanstoppabschnitt 442 verbunden, wobei der Verbindungsabschnitt 444 einen Querschnitt mit derselben Form, jedoch einem geringeren Umfang als der Befestigungsabschnitt 441 aufweist, so dass der Spanstopper 44 sicher in der Öffnung 423 des Spannfutters 42 gehalten wird und nicht entlang der Längsachse L des Spannfutters 42 aus dieser herausbewegt werden kann. Nach Festziehen der Überwurfmutter 43 ist auch ein Entfernen des Spanstoppers 44 orthogonal zur Längsachse L des Spannfutters 42 ausgeschlossen.

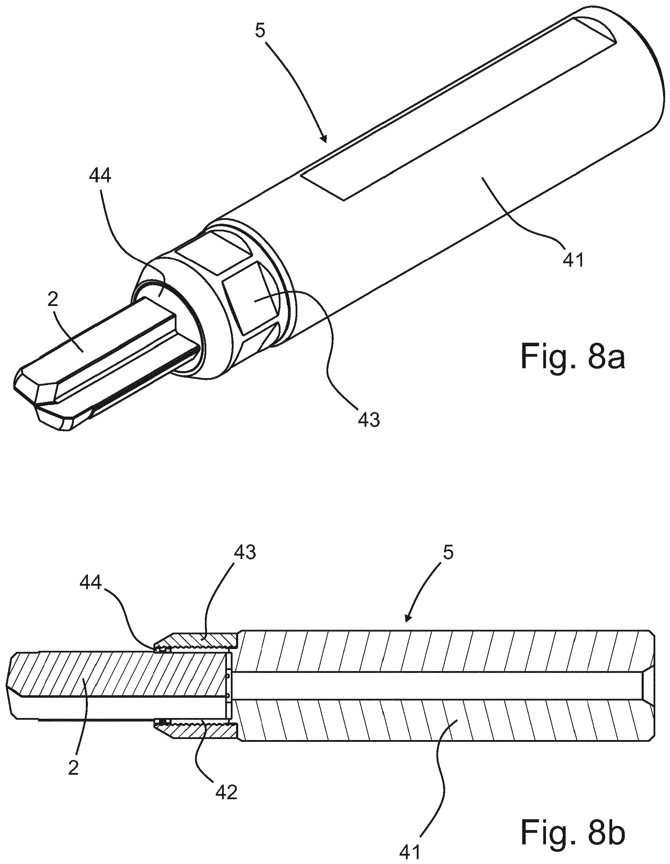

Indem ein Formbohrer 2 gemäß dem ersten Ausführungsbeispiel der Erfindung durch die Öffnung 443 des Spanstoppers 44 in den Werkzeugaufnahmebereich 425 des Spannfutters 42 eingeführt wird und anschließend die Überwurfmutter 43 angezogen wird, wird ein Werkzeughaltersystem 5 erhalten, in dem der Formbohrer 2 verdrehsicher fixiert ist. Dieses ist in den Fig. 8a und 8b dargestellt. Auch der Formbohrer 3 gemäß dem zweiten Ausführungsbeispiel der Erfindung kann in derselben Weise im Werkzeughaltersystem 5 fixiert werden. Das Werkzeughaltersystem 5 ist für den Zweck der Kleinstbearbeitung geeignet.

## Patentansprüche

1. Rohling (1) für einen Formbohrer aufweisend einen ersten Bereich (11) mit im Wesentlichen rechtwinklig trapezförmigem Querschnitt und einen zweiten Bereich (12) mit im Wesentlichen rechtwinklig trapezförmigem Querschnitt, wobei der erste Bereich (11) parallel zum zweiten Bereich (12) angeordnet ist und die längste Seite des Querschnitts des ersten Bereichs (11) die längste Seite des Querschnitts des zweiten Bereichs (12) kontaktiert, und wobei die Seite des trapezförmigen Querschnitts des ersten Bereichs (11), welche über zwei rechte Winkel mit benachbarten Seiten verbunden ist, parallel zu jener Seite des trapezförmigen Querschnitts des zweiten Bereichs (12) verläuft, die ihrerseits über zwei rechte Winkel mit benachbarten Seiten verbunden ist, **dadurch gekennzeichnet, dass** der Rohling (1) eine eckige im Querschnitt annähernd Z-förmige Struktur aufweist.

2. Rohling (1) nach Anspruch 1, **dadurch gekennzeichnet, dass** der Querschnitt des ersten Bereichs (11) im Wesentlichen dem Querschnitt des zweiten Bereichs (12) entspricht.

3. Formbohrer (2, 3), aufweisend einen Bohrabschnitt (21, 31) und einen Einspannabschnitt (22, 32), wobei der Einspannabschnitt (22, 32) einen ersten Einspannbereich (221, 321) mit im Wesentlichen rechtwinklig trapezförmigen Querschnitt und einen zweiten Einspannbereich (222, 322) mit im Wesentlichen rechtwinklig trapezförmigen Querschnitt aufweist, der erste Einspannbereich (221, 321) parallel zum zweiten Einspannbereich (222, 322) angeordnet ist und die längste Seite des Querschnitts des ersten Einspannbereichs (221, 321) die längste Seite des Querschnitts des zweiten Einspannbereichs (222, 322) kontaktiert, und wobei die Seite des trapezförmigen Querschnitts des ersten Einspannbereichs (221, 321), welche über zwei rechte Winkel mit benachbarten Seiten verbunden ist, parallel zu jener Seite des trapezförmigen Querschnitts des zweiten Einspannbereichs (222, 322) verläuft, die ihrerseits über zwei rechte Winkel mit benachbarten Seiten verbunden ist, **dadurch gekennzeichnet, dass** der Einspannabschnitt (22, 32) eine eckige im Querschnitt annähernd Z-förmige Struktur aufweist.

4. Formbohrer (2, 3) nach Anspruch 4, **dadurch gekennzeichnet, dass** er aus einem Rohling (1) nach Anspruch 1 oder 2 herstellbar ist.

## Claims

1. Blank (1) for a form drill having a first region (11) having a substantially rectangular trapezoidal cross-section and a second region (12) having a substantially rectangular trapezoidal cross-section, wherein the first region (11) is arranged in parallel to the second region (12), and the longest side of the cross-section of the first region (11) contacts the longest side of the cross-section of the second region (12), and wherein the side of the trapezoidal cross-section of the first region (11), which is connected to adjacent sides via two right angles, runs in parallel to that side of the trapezoidal cross-section of the second region (12), which in turn is connected to adjacent sides via two right angles, **characterised in that** the blank (1) has an angular structure approximately Z-shaped in cross-section.

2. Blank (1) according to claim 1, **characterised in that** the cross-section of the first region (11) substantially corresponds to the cross-section of the second region (12).

3. Form drill (2, 3) having a drilling section (21, 31) and a clamping section (22, 32), wherein the clamping section (22, 32) has a first clamping region (221, 321) having a substantially rectangular trapezoidal cross-section and a second clamping region (222, 322) having a substantially right-angled trapezoidal cross-section, the first clamping region (221, 321) is arranged in parallel to the second clamping region (222, 322), and the longest side of the cross-section of the first clamping region (221, 321) contacts the longest side of the cross-section of the second clamping region (222, 322), and wherein the side of the trapezoidal cross-section of the first clamping region (221, 321), which is connected to adjacent sides via two right angles, runs in parallel to that side of the trapezoidal cross-section of the second clamping region (222, 322), which in turn is connected to adjacent sides via two right angles, **characterised in that** the clamping section (22, 32) has an angular structure approximately Z-shaped in cross-section.

4. Form drill (2, 3) according to claim 4, **characterised in that** it can be produced from a blank (1) according to claim 1 or 2.

## Revendications

1. Ebauche (1) pour forêt de forme présentant une première région (11) avec une section transversale en forme de trapèze essentiellement à angles droits et une deuxième région (12) avec une section transversale en forme de trapèze essentiellement à angles droits, où la première région (11) est disposée parallèlement par rapport à la deuxième région (12) et le côté le plus long de la section transversale de la première région (11) entre en contact avec le côté le plus long de la section transversale de la deuxième région (12), et où le côté de la section transversale en forme de trapèze de la première région (11), lequel est relié avec des côtés voisins par deux angles droits, s'étend parallèlement vers le côté de la section transversale en forme de trapèze de la deuxième région (12) qui est reliée pour sa part par deux angles droits avec des côtés voisins, **caractérisée en ce que** l'ébauche (1) présente une structure approximativement en forme de Z carrée en section transversale.

2. Ebauche (1) selon la revendication 1, **caractérisée en ce que** la section transversale de la première région (11) correspond essentiellement à la section transversale de la deuxième région (12).

3. Forêt de forme (2, 3), présentant une section de perçage (21, 31) et une section de serrage (22, 32), où la section de serrage (22, 32) présente une première région de serrage (221, 321) avec une section transversale en forme de trapèze essentiellement à angles droits et une deuxième région de serrage (222, 322) avec une section transversale en forme de trapèze essentiellement à angles droits, la première région de serrage (221, 321) est disposée parallèlement par rapport à la deuxième région de serrage (222, 322) et le côté le plus long de la section transversale de la première région de serrage (221, 321) entre en contact avec le côté le plus long de la section transversale de la deuxième région de serrage (222, 322), et où le côté de la section transversale en forme de trapèze de la première région de serrage (221, 321), lequel est relié avec des côtés voisins par deux angles droits, s'étend parallèlement par rapport au côté de la section transversale en forme de trapèze de la deuxième région (222, 322), qui est reliée pour sa part par deux angles droits avec des côtés voisins, **caractérisé en ce que** la section de serrage (22, 32) présente une structure approximativement en forme de Z carrée en section transversale.

4. Forêt de forme (2, 3) selon la revendication 4, **caractérisé en ce que** l'on peut le fabriquer à partir d'une ébauche (1) selon la revendication 1 ou la revendication 2.
